# FASCICULE DE BREVET EUROPEEN

(11) **EP 1 984 110 B1**
(45) Date de publication et mention de la délivrance du brevet: **19.10.2011**
(21) Numéro de dépôt: 07730986.2
(22) Date de dépôt: 15.02.2007
(51) Int. Cl.: B01J 19/00, B01L 3/00

(54) **PROCEDE DE CONTROLE DE L'AVANCEE D'UN LIQUIDE DANS UN COMPOSANT MICROFLUIDIQUE**
VERFAHREN ZUR STEUERUNG DES VERLAUFS EINER FLÜSSIGKEIT IN EINER MIKROFLUIDISCHEN EINHEIT
METHOD FOR CONTROLLING THE PROGRESS OF A LIQUID IN A MICROFLUIDIC UNIT

(30) Priorité: 16.02.2006 FR 0601375
(43) Date de publication de la demande: 29.10.2008
(73) Titulaire: Commissariat à l'Énergie Atomique et aux Énergies Alternatives, 75015 Paris (FR); BIOMERIEUX, 69280 Marcy-L'Etoile (FR)
(72) Inventeur: DELATTRE, Cyril, F-38140 Izeaux (FR); CHARLES, Raymond, F-38430 Saint-Jean de Moirans (FR); POUTEAU, Patrick, F-38240 MEYLAN (FR)
(74) Mandataire: Hecké, Gérard
(86) Numéro de dépôt international: PCT/FR2007/000275
(87) Numéro de publication internationale: WO 2007/093712

(56) Documents cités:
- WO-A-02/41995
- WO-A-03/098218
- WO-A1-01/04909
- US-A1- 2003 190 608

## Description

### Domaine technique de l'invention

L'invention concerne les composants microfluidiques du type biopuces et, plus particulièrement, un procédé de contrôle de l'avancée d'un liquide de l'entrée vers la sortie d'un composant microfluidique comprenant au moins un microcanal, comportant une pluralité de zones de réaction ou de détection successives, disposées à des intervalles prédéterminés, et une pluralité de vannes passives, disposées entre deux zones de réaction ou de détection successives, le procédé contrôlant l'avancée du liquide dans le microcanal par contrôle de l'augmentation d'une différence de pression entre l'entrée et la sortie du composant.

### État de la technique

Dans le domaine des dispositifs d'analyse médicale, plus particulièrement des microsystèmes pour la biologie et la chimie, du type biopuces et composants bioMicroElectroMechanicalSystems (bioMEMS), l'utilisation de composants microfluidiques pouvant enchaîner plusieurs étapes d'un protocole biologique déterminé est connue.

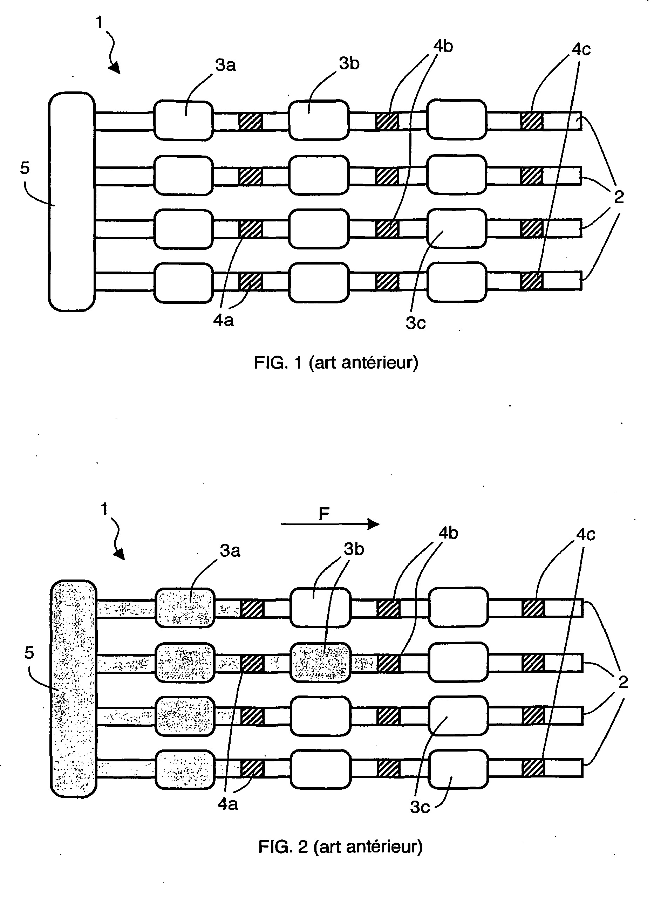

Comme représenté schématiquement sur la figure 1, un composant microfluidique 1 comprend, de préférence, plusieurs microcanaux 2, dans lesquels le liquide avance en parallèle. Chaque microcanal 2 comporte des zones 3 de réaction ou de détection, disposées, par exemple, à des intervalles prédéterminés et réguliers. Les zones 3 de réaction ou de détection peuvent servir notamment de chambre de réaction, pour les différentes étapes du protocole biologique à réaliser, ou peuvent servir de zone de mélange durant l'avancée du liquide. Le composant 1 étant vide au préalable, le liquide, plus particulièrement l'interface liquide/gaz, avance dans les microcanaux 2 de l'amont vers l'aval du composant 1, à savoir de l'entrée vers la sortie du composant 1, selon la flèche F de la figure 2, définissant le sens d'avancée du liquide.

Les microcanaux 2 comportent également des vannes passives 4, disposées chacune entre deux zones 3 de réaction ou de détection successives et destinées à bloquer temporairement l'avancée du liquide dans le composant 1. Dans le mode particulier de réalisation des figures 1 à 3, le composant 1 comporte, par exemple, quatre microcanaux 2, trois séries de zones de réaction ou de détection 3a, 3b, 3c et trois séries de vannes passives 4a, 4b, 4c intercalées. Sur les figures 1 à 3, les vannes passives 4a, 4b, 4c sont représentées par des hachures et sont définies, par exemple, par une portion non mouillante des microcanaux 2, apte à bloquer le liquide. Les portions adjacentes aux vannes passives 4a, 4b, 4c sont alors des portions mouillantes des microcanaux 2, permettant l'écoulement du liquide.

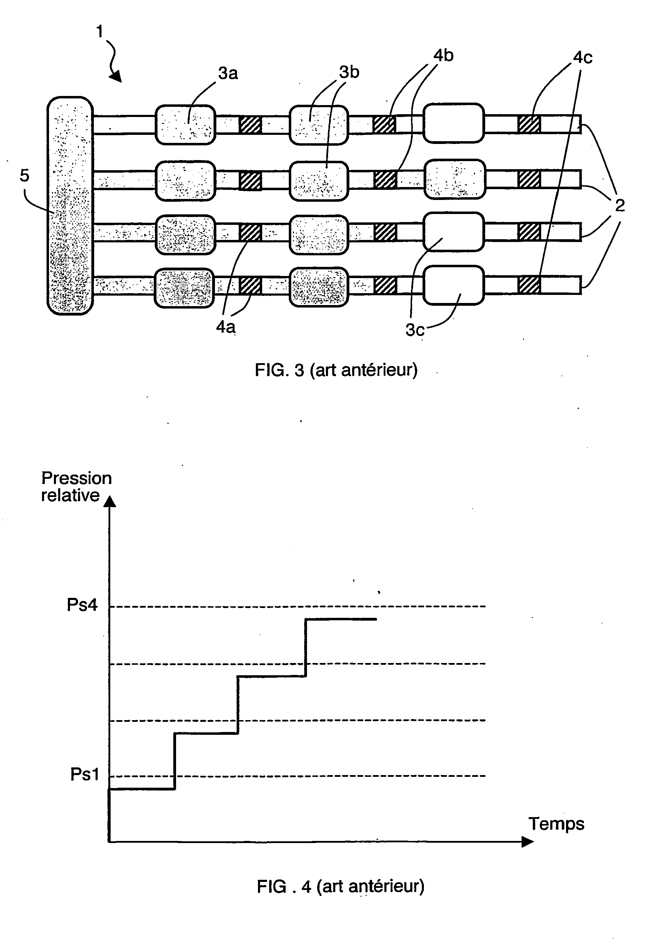

Le brevet US 5 230 866 décrit notamment le principe de fonctionnement d'une telle vanne passive, destinée à contrôler l'arrêt du liquide (représenté en sombre sur les figures 2 et 3) avançant sous l'effet d'une pression externe. Une vanne passive 4 ne laisse passer le liquide que si la différence de pression entre l'amont et l'aval du composant 1 augmente au-dessus d'une valeur de seuil Ps, propre à chaque vanne passive 4 du composant 1. La valeur de seuil Ps dépend généralement des caractéristiques géométriques et de mouillage de la surface en contact avec le liquide dans la vanne passive 4. À titre d'exemple, le fonctionnement de la vanne passive 4 est basé sur le principe du changement local des forces capillaires, dues aux variations brusques des propriétés de surface, notamment mouillabilité ou géométrie, du microcanal 2.

Un procédé de contrôle de l'avancée du liquide dans un tel composant 1 consiste à augmenter la différence de pression entre l'amont et l'aval du composant 1, afin de faire avancer le liquide de zones 3 de réaction ou de détection en zones 3 de réaction ou de détection, les vannes passives 4 d'une même série, à savoir celles disposées sur une même ligne verticale sur les figures 1 à 3, étant toutes identiques.

Le procédé consiste à augmenter la différence de pression au-dessus de la valeur de seuil Ps correspondant à la vanne passive 4 à passer, puis à baisser la différence de pression au-dessous de la valeur de seuil Ps correspondante, pour faire avancer le liquide dans le composant.

Cependant, les défauts sur les microcanaux 2 du composant 1 peuvent entraîner le passage d'une vanne passive 4 avant le passage des autres. À titre d'exemple, comme représenté sur la figure 2, la vanne passive 4a précédant la deuxième zone 3b de réaction ou de détection du deuxième microcanal 2 a été passée avant les autres, notamment à cause des défauts éventuels de géométrie et/ou de mouillabilité de la vanne passive 4a. La deuxième zone 3b de réaction ou de détection se remplit donc avant les autres zones 3b de la même série.

Comme représenté sur la figure 3, le microcanal 2 garde ce décalage pendant toute l'avancée du liquide, notamment si toutes les autres vannes passives 4a, 4b, 4c fonctionnent normalement comme décrit ci-dessus. Le microcanal 2 correspondant à cette vanne passive 4a va donc se remplir plus rapidement que les autres. Il en résulte notamment des problèmes de synchronisation dans l'avancée du liquide, ce qui affecte la réalisation des étapes biologiques, et des difficultés dans l'analyse et ultérieurement dans l'exploitation des résultats. Notamment, dans le cas où plusieurs vannes passives 4 sont défectueuses, un cumul des effets négatifs est observé, menant à des aberrations en termes d'exploitation des résultats.

Pour remédier à ces inconvénients, les documents US 2004/0109793 et WO 02/41995 et le brevet US 6 296 020 décrivent chacun un dispositif de répartition de liquide dans différentes voies d'un composant 1 comme décrit ci-dessus, à partir d'une chambre d'entrée commune, avec passage d'une zone de réaction ou de détection à une autre zone de réaction ou de détection sur chaque voie. Le contrôle du passage du liquide est assuré par des vannes passive disposées en sortie des zones de réaction ou de détection. Les vannes passives sont disposées de manière à avoir des valeurs de seuil Ps de plus en plus élevées, de l'amont vers l'aval du dispositif.

Comme représenté schématiquement sur la figure 4, les vannes passives 4 sont agencées selon quatre séries avec des valeurs de seuil Ps1 à Ps4 croissantes de l'amont vers l'aval du composant 1. Le procédé de contrôle de l'avancée du liquide dans le composant 1 consiste alors à augmenter sous forme de paliers de pression la différence de pression entre l'amont et l'aval du composant. L'étape de protocole biologique correspondant à chaque zone 3 de réaction ou de détection est réalisée à pression constante pendant chaque palier de pression. L'application d'une différence de pression par paliers, jusqu'à une valeur juste inférieure à la valeur de seuil Ps de la vanne passive 4 correspondante, permet de passer la vanne passive 4 et de bloquer le liquide contre la vanne passive 4 suivante. Dans le cas de plusieurs séries de vannes passives 4 en parallèles, comme représenté sur les figures 1 à 3, l'application d'une différence de pression par paliers permet de passer l'ensemble des vannes passives 4 d'une même série en même temps et de bloquer le liquide contre la série suivante de vannes passives 4.

Ce procédé particulier décrit ci-dessus permet d'éviter qu'une vanne passive 4 cède préférentiellement à la pression et remplisse directement tout un microcanal 2 du composant 1. Cependant, il est difficile technologiquement d'enchaîner la réalisation d'un nombre élevé de vannes passives 4, avec des valeurs de seuil Ps croissantes de l'entrée vers la sortie du composant 1. Par ailleurs, la miniaturisation d'un tel composant 1 est limitée par des impératifs de taille, au-delà desquels la viabilité du composant 1 est remise en question.

Par ailleurs, le document WO 01/04909 décrit également un autre type de dispositif microfluidique comprenant une pluralité de branches parallèles ayant chacune une cellule de réaction et une vanne capillaire. Une impulsion de gaz à haute pression permet de faire passer le liquide à travers les vannes de toutes les branches du dispositif.

Ainsi, aucun composant microfluidique multicanaux connu ne permet de remédier aux inconvénients précités et notamment au problème des vannes passives cédant préférentiellement à la pression, plus particulièrement observé lors des étapes liées aux zones 3 de détection ou de réaction, sièges de réactions chimiques, biochimiques ou biologiques.

### Objet de l'invention

L'invention a pour but de remédier à l'ensemble des inconvénients précités et a pour objet un procédé de contrôle de l'avancée d'un liquide dans un microcanal d'un composant microfluidique, améliorant les procédés de contrôle existants en apportant une fiabilité dans l'utilisation du composant, tout en étant facile à mettre en oeuvre et quelles que soient les caractéristiques des vannes passives du composant.

Le but de l'invention est atteint par les revendications annexées et, plus particulièrement, par le fait que l'augmentation de la différence de pression est contrôlée de manière discontinue sous forme d'impulsions de déblocage et par le fait que la différence de pression est ramenée à une valeur nulle, entre deux impulsions de déblocage successives.

Un tel procédé ne dépend alors pas exclusivement de la pression de seuil des vannes passives et peut s'appliquer à un nombre illimité de vannes d'une même série.

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement un composant microfluidique, destiné à être contrôlé par un procédé de contrôle de l'avancée d'un liquide selon l'art antérieur.
Les figures 2 et 3 représentent schématiquement le composant selon la figure 1, à l'intérieur duquel circule le liquide.
La figure 4 est un graphique représentant la pression relative en fonction du temps, pour un composant contrôlé par un procédé selon l'art antérieur.
La figure 5 est un graphique représentant la pression relative en fonction du temps, pour un composant contrôlé par un procédé de contrôle de l'avancée du liquide selon l'invention.
Les figures 6 à 8 représentent schématiquement un composant contrôlé par le procédé selon la figure 5.
La figure 9 représente schématiquement un banc de contrôle automatique de la pression, pour la mise en oeuvre du procédé selon les figures 5 à 8.

### Description de modes particuliers de réalisation

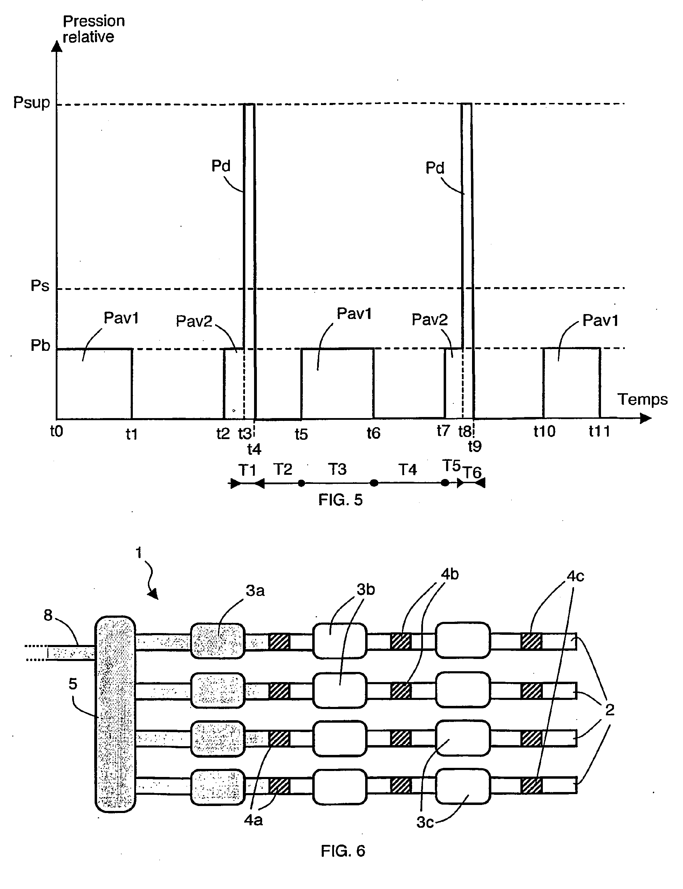

Dans le mode particulier de réalisation des figures 5 à 9, le composant microfluidique 1 comporte, de préférence, plusieurs microcanaux 2, disposés en parallèle, chaque microcanal 2 comportant une entrée reliée à une chambre d'entrée 5 commune à tous les microcanaux 2 (figures 6 à 8). Le composant 1 est contrôlé, de sorte que le liquide avance de façon synchronisée dans tous les microcanaux 2. Les vannes passives 4 et les zones 3 de réaction ou de détection du composant 1 sont agencées, de préférence, selon des séries régulières espacées à intervalles prédéterminés réguliers.

Le procédé de contrôle du composant 1 permet notamment de synchroniser le passage des vannes passives 4 du composant 1, afin qu'elles permettent le passage du liquide en même temps sur tous les microcanaux 2 du composant 1. Le procédé gère l'avancée du liquide en fonction de la différence de pression entre l'entrée et la sortie du composant 1, à savoir entre l'amont et l'aval du composant 1.

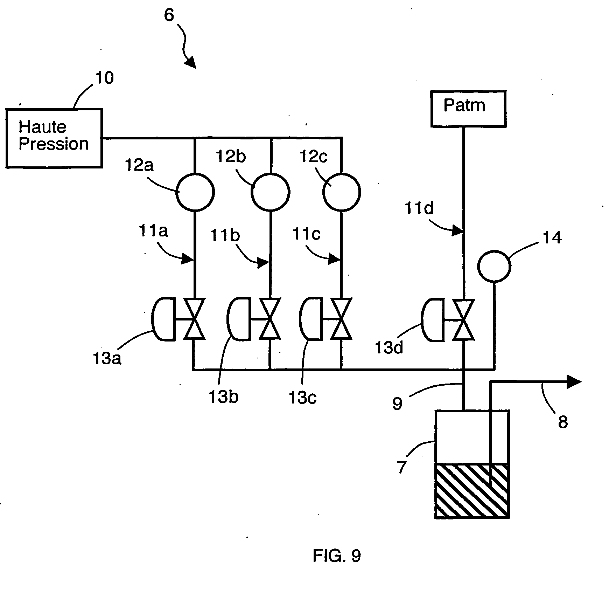

Le composant 1 est, de préférence, vide au départ, le liquide étant apporté, par exemple, par un conduit de sortie 8 en provenance d'un réservoir 7 (figure 9). La chambre d'entrée 5 commune est remplie complètement et la pression est identique dans tous les microcanaux 2. Le procédé gère l'avancée du liquide, à savoir l'avancée de l'interface entre le liquide et le gaz contenu initialement dans le composant 1, par augmentation de la différence de pression entre l'entrée du composant 1, définie par la chambre d'entrée 5 sur les figures 6 à 8, et la sortie du composant 1, définie par l'extrémité des microcanaux 2 sur les figures 6 à 8.

Sur la figure 5, l'échelle des temps et l'échelle des valeurs de pressions relatives n'ont pas été respectées pour des raisons de clarté et de lisibilité du graphique. Le procédé consiste à contrôler de manière discontinue l'augmentation de la différence de pression entre l'amont et l'aval du composant 1. L'augmentation de la différence de pression est contrôlée sous forme d'impulsions de déblocage Pd des vannes passives 4 et de périodes d'avancée du liquide Pav1, Pav2.

Chaque impulsion de déblocage Pd correspond à une variation brusque et courte dans le temps de la différence de pression entre l'amont et l'aval du composant 1. Cette variation passe par une valeur Psup maximale et redescend vers un niveau, de préférence, sensiblement proche de zéro. Cette valeur Psup est supérieure à la valeur de seuil Ps maximum de l'ensemble des valeurs de seuils Ps des vannes passives 4 du composant 1.

Comme représenté sur la figure 5, chaque impulsion de déblocage Pd présente une valeur Psup, de préférence, très élevée par rapport à la valeur de seuil Ps des vannes passives 4, dans le cas où les vannes passives 4 sont toutes identiques. Dans le cas où les vannes passives 4 présentent des valeurs de seuil Ps différentes, dues à leurs caractéristiques géométrique et/ou de mouillabilité différentes, la valeur Psup des impulsions de déblocage Pd est alors très supérieure à la valeur de seuil Ps maximum de la vanne passive 4 du composant 1 ayant la valeur de seuil Ps la plus élevée de toutes les vannes passives 4.

Une période continue intermédiaire Pav1 d'avancée du liquide, réalisée entre les impulsions de déblocage Pd, est destinée à faire avancer le liquide, pour remplir les zones 3 de réaction ou de détection correspondantes du composant 1. Chaque période intermédiaire Pav1 d'avancée du liquide est réalisée à une différence de pression, de préférence, très inférieure à la valeur Psup d'une impulsion de déblocage Pd et pendant un temps potentiellement beaucoup plus long.

Dans le mode particulier de la figure 5, le procédé de contrôle du composant 1 comporte, par exemple, au moins une période continue intermédiaire Pav1 d'avancée du liquide obligatoire, appliquée après une impulsion de déblocage Pd, et au moins une période additionnelle Pav2 d'avancée du liquide optionnelle, appliquée juste avant une impulsion de déblocage Pd, pour s'assurer du remplissage complet des microcanaux 2, jusqu'au blocage du liquide par les vannes passives 4 correspondantes.

Pendant chaque période d'avancée du liquide Pav1, Pav2, la différence de pression appliquée entre l'entrée et la sortie du composant 1 a une valeur de base Pb maximale, inférieure à la valeur de seuil minimum des vannes passives 4 du composant 1. Les périodes continues intermédiaires Pav1 d'avancée du liquide doivent, de préférence, acheminer le liquide jusqu'au contact des vannes passives 4 suivantes, afin d'éviter l'application des périodes additionnels Pav2 d'avancée de liquide.

Une étape du protocole biologique, associé aux zones 3 de réaction ou de détection du composant 1, doit être réalisée à une différence de pression nulle, entre une période continue intermédiaire Pav1 d'avancée du liquide et, éventuellement, une période additionnelle Pav2 d'avancée du liquide. En effet, en cas de conservation d'une période Pav1 d'avancée du liquide, pendant les étapes de protocole biologique associé, certaines vannes passives 4 pourraient être passées préférentiellement, notamment à cause de la durée des protocoles biologiques réalisés dans les zones 3 de réaction ou de détection. Cela engendrerait alors des erreurs quant à la fiabilité de l'analyse, du fait notamment de la perte d'une partie du volume réactionnel. Une telle différence de pression nulle, comme décrit ci-dessus, permet ainsi d'éviter toute perte de l'intégrité du volume réactionnel au cours de l'étape du protocole biologique réalisée dans les zones 3 de réaction ou de détection correspondantes.

À titre d'exemple, des tests expérimentaux de tenue des vannes passives 4 sous pression ont été réalisés avec un tampon biologique constitué des éléments suivants : Tris pH8.5 40mM, DMSO 15% vol., KCI 80mM, MgCl2 12mM, BSA 0.13mg/mL. Ce tampon classique en biologie a été injecté dans un composant microfluidique comportant des zones de réaction ou de détection et des vannes passives à élargissement brusque, avec un diamètre d'ouverture de 30pm et une pression de déclenchement autour de 70mbar spécifique à ce tampon. Le composant est régulé en température à 41°C. La pression de remplissage du composant est voisine de 30mbar et cette pression est appliquée jusqu'à ce que le liquide se bloque sur les vannes à élargissement.

Deux expériences sont ensuite réalisées, selon le tableau ci-dessous, d'une part en ramenant la pression à zéro (première ligne du tableau ci-dessous) et d'autre part en ramenant la pression à sa valeur de remplissage (deuxième ligne du tableau ci-dessous). Le temps (deuxième colonne du tableau ci-dessous) est mesuré jusqu'à voir apparaître le liquide dans la zone de réaction ou de détection suivante du composant, signe que le liquide a franchi la vanne passive correspondante.

| | **Temps jusqu'au passage du liquide** |
|---|---|
| **Pression nulle** | > 1 heure (pas de passage de vannes pendant cette durée) |
| **Pression de l'ordre de 30mbar** | < 1 minute |

Le tableau ci-dessus donne les valeurs de temps, au-delà duquel le liquide est passé dans la zone de réaction ou de détection suivante du composant. Il ressort donc du tableau ci-dessus que le temps est largement supérieur à l'heure, lorsque aucune différence de pression n'est appliquée dans le composant. En revanche, les vannes passives ne maintiennent le liquide que moins d'une minute, lorsque la différence de pression est maintenue à sa valeur de remplissage. Il ressort donc du tableau ci-dessus la très grande importance de l'étape décrite ci-dessus, consistant à ramener la différence de pression à une valeur nulle, afin d'optimiser la réalisation des étapes du protocole biologique dans les zones de réaction ou de détection du composant.

Le procédé de contrôle va être décrit plus en détail au regard des figures 5 à 8. Sur les figures 6 à 8, le composant 1 comprend, par exemple, une chambre d'entrée 5, par laquelle est introduit le liquide, commune à toutes les entrées des microcanaux 2. À titre d'exemple, une zone 3 de réaction ou de détection a un volume de l'ordre de 0,3µl, avec une profondeur de l'ordre de 200µm. Le liquide considéré dans le composant 1 étant de l'eau et toutes les vannes passives 4 du composant 1 étant identiques, une vanne passive 4 est définie, par exemple, par un changement brusque de géométrie du microcanal 2 associé. À titre d'exemple, un microcanal 2 présente un diamètre général de l'ordre de 500µm et un diamètre rétrécie de l'ordre de 100µm, définissant la vanne passive 4. Une vanne passive 4 présente une valeur de seuil Ps comprise, par exemple, entre 5mbar et 2bar. La valeur de seuil Ps des vannes passives 4 est, de préférence, de l'ordre de 20mbar.

Dans le mode particulier de réalisation des figures 6 à 8, le contrôle de l'augmentation de la différence de pression entre l'entrée et la sortie du composant 1 est réalisé en amont du composant 1. La chambre d'entrée 5 est, par exemple, connectée à un dispositif de contrôle d'une pression externe permettant la mise en oeuvre du contrôle de la différence de pression entre l'amont et l'aval du composant 1 (figure 9).

Sur la figure 5, la première étape du procédé consiste à appliquer, entre les instants t0 et t1, une période continue intermédiaire Pav1 d'avancée du liquide, à la valeur de base Pb. Cette différence de pression Pb permet le remplissage de la première série des zones 3a de réaction ou de détection, jusqu'au blocage du liquide par la première série des vannes passives 4a, comme représenté sur la figure 6.

Entre les instants t1 et t2, la différence de pression doit être nulle, afin de stopper l'avancée du liquide. L'étape du protocole biologique correspondant aux premières zones 3a de réaction ou de détection est alors réalisée, de préférence, simultanément dans toutes les zones 3a de réaction ou de détection de la première série. L'étape de protocole biologique réalisée dans chaque zone 3a de réaction ou de détection d'une même série peut être différente selon les microcanaux 2.

Entre les instants t2 et t3, une période additionnelle Pav2 d'avancée du liquide peut éventuellement être appliquée, à la valeur de base Pb, juste avant l'impulsion de déblocage Pd, dans le cas où le liquide n'aurait pas complètement rempli les microcanaux 2 jusqu'aux vannes passives 4a suivant les zones 3a de réaction ou de détection.

Entre les instants t3 et t4, correspondant à une période de temps T1, une première impulsion de déblocage Pd est appliquée dans le composant 1. La valeur Psup de l'impulsion de déblocage Pd est, de préférence, très élevée par rapport à la valeur de seuil Ps des vannes passives 4a à 4c. La valeur Psup est, par exemple, comprise entre 1 bar et 2,5bar. La valeur Psup est, de préférence, de l'ordre de 2bar. La durée T1 de l'impulsion de déblocage Pd est très courte et comprise, par exemple, entre 100ms et 500ms. La durée T1 est, de préférence, de l'ordre de 350ms.

D'une manière générale, la valeur Psup de l'impulsion de déblocage Pd doit permettre de déclencher le passage systématique de toutes les vannes passives 4 d'une même série et, de préférence, de façon synchronisée. La durée T1 de cette impulsion de déblocage Pd doit être suffisamment longue pour permettre ce passage, mais suffisamment courte pour que le liquide ait juste passé les vannes passives 4 correspondantes, sans remplir complètement les zones 3 de réaction ou de détection suivantes.

Par ailleurs, le rapport de la valeur Psup d'une impulsion de déblocage Pd sur la valeur de seuil Ps maximum des vannes passives 4 est supérieur à 1,25 et compris, de préférence, entre 1,25 et 200. Le rapport est, de préférence, de l'ordre de 100, pour une valeur de seuil Ps de l'ordre de 20mbar et une valeur Psup de l'impulsion de déblocage Pd de l'ordre de 2bar.

À l'instant t4, correspondant à la fin de la période T1, la différence de pression est ramenée, de préférence, à zéro, de sorte que l'impulsion de déblocage Pd présente une valeur inférieure nulle. Entre les instants t4 et t5, correspondant à une période de temps T2, la différence de pression reste égale à zéro. La durée T2 doit être suffisamment longue, pour permettre à la pression de redescendre complètement pour arrêter l'avancée du liquide. La période T2 est, par exemple, de l'ordre de 500ms.

Sur la figure 5, l'étape du procédé de contrôle décrite ci-dessus est facultative. Il est possible que l'impulsion de déblocage Pd présente une valeur inférieure égale à la valeur de base Pb, afin de continuer l'avancée du liquide et d'effectuer le remplissage des zones 3b de réaction ou de détection suivantes, tout de suite après l'impulsion de déblocage Pd.

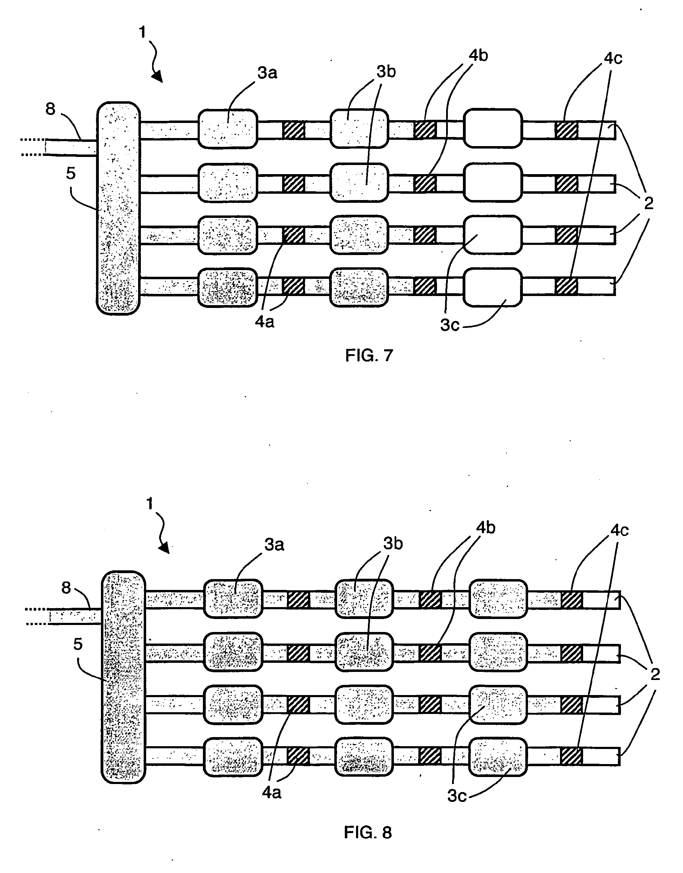

Entre les instants t5 et t6, correspondant à une période de temps T3, une période continue intermédiaire Pav1 d'avancée de liquide est réalisée. Cette période continue intermédiaire Pav1 d'avancée du liquide a pour but de remplir les zones 3b de réaction ou de détection suivantes (figure 7), à savoir celles de la deuxième série dans le mode particulier de réalisation du composant 1 représenté sur les figures 6 à 8.

D'une manière générale, chaque période continue intermédiaire Pav1 d'avancée du liquide présente une valeur maximale suffisante pour faire avancer le liquide et, de préférence, égale à la valeur de base Pb et toujours inférieure à la valeur de seuil Ps minimum de l'ensemble des vannes passives 4. À titre d'exemple, la valeur de base Pb maximale d'une période continue intermédiaire Pav1 d'avancée du liquide est comprise entre 5mbar et 100mbar. La valeur de base Pb est, de préférence, de l'ordre de 15mbar.

Sur la figure 5, à l'instant t6, la période continue intermédiaire Pav1 d'avancée du liquide présente une valeur minimale nulle, afin de bloquer l'avancée du liquide dans les microcanaux 2. La durée T3 d'une période continue intermédiaire Pav1 d'avancée du liquide est, par exemple, de l'ordre de 60s.

D'une manière générale, la durée T3 d'une période continue intermédiaire Pav1 d'avancée du liquide doit être suffisamment longue, pour permettre au liquide de remplir complètement les zones 3 de réaction ou de détection correspondantes et de s'arrêter sur les vannes passives 4 correspondantes, pour tous les microcanaux 2.

Par ailleurs, le rapport de la durée T1 d'une impulsion de déblocage Pd sur la durée T3 d'une période continue intermédiaire Pav1 d'avancée du liquide est, par exemple, compris entre 0,1% et 1%. Le rapport est, de préférence, de l'ordre de 0,58%, pour une durée T1 de l'ordre de 350ms et une durée T3 de l'ordre de 60s. D'une façon générale, les durées T1 et T3 sont notamment choisies en fonction de la pression et de la géométrie du composant 1.

Par ailleurs, la durée T3 d'une période continue intermédiaire Pav1 d'avancée du liquide peut être déterminée en fonction de signaux fournis par au moins un détecteur de remplissage, associé aux microcanaux 2 du composant 1. Le principe du détecteur de remplissage est basé, notamment sur la détection d'un changement des propriétés physiques entre le gaz contenu initialement dans les microcanaux 2 et le liquide.

À titre d'exemple, un détecteur de remplissage optique peut être utilisé, en disposant un émetteur et un récepteur sur les deux côtés de chaque microcanal 2. Il est alors possible de mesurer un changement des propriétés optiques, notamment par détermination du passage du gaz au liquide.

Dans un autre exemple de réalisation, un détecteur de remplissage électrique peut être utilisé, en disposant deux électrodes au niveau de chaque vanne passive 4. Les liquides utilisés étant conducteurs, il est possible de détecter la présence du liquide par un changement brusque de la conductivité électrique entre les deux électrodes.

Sur la figure 5, entre les instants t6 et t7, correspondant à une période de temps T4, l'étape ou les étapes du protocole biologique correspondant à la deuxième série des zones 3b de réaction ou de détection sont réalisées (figure 7). La différence de pression doit être impérativement nulle entre l'amont et l'aval du composant 1, afin, d'une part, d'assurer une bonne synchronisation de l'avancée du liquide dans tous les microcanaux 2 et, d'autre part, d'éviter toute perte de l'intégrité du volume réactionnel au cours de l'étape de protocole biologique réalisée. En effet, en cas de conservation de la période Pav1 d'avancée du liquide, pendant les étapes de protocole biologique associé, certaines vannes passives 4 pourraient céder préférentiellement à la pression, comme décrit précédemment. Cela engendrerait alors des pertes d'une partie du volume réactionnel.

Une telle différence de pression nulle, comme décrit ci-dessus, permet ainsi d'éviter toute perte de l'intégrité du volume réactionnel au cours de l'étape du protocole biologique réalisée dans les zones 3b de réaction ou de détection correspondantes. À titre d'exemple, la durée T4 est comprise entre 60s et 3600s. La durée T4 est, de préférence, de l'ordre de 1800s.

À l'instant t7, une augmentation de la différence de pression est appliquée dans les microcanaux 2, jusqu'à atteindre la valeur de base Pb. Entre les instants t7 et t8, correspondant à une période de temps T5, la période additionnelle Pav2 d'avancée du liquide permet de finir le remplissage des microcanaux 2, jusqu'à atteindre la seconde série des vannes passives 4b. Cette étape s'applique uniquement quand les microcanaux 2 ne sont pas complètement remplis, après la période continue intermédiaire Pav1 d'avancée du liquide, effectuée entre les instants t5 et t6. À titre d'exemple, la durée T5 d'une période additionnelle Pav2 d'avancée du liquide est de l'ordre de 60s.

D'une manière générale, la durée T5 doit être suffisamment longue pour permettre au liquide de s'arrêter sur les vannes passives 4 correspondantes dans tous les microcanaux 2. Par ailleurs, la durée T5 d'une période additionnelle Pav2 d'avancée du liquide peut être déterminée en fonction de signaux fournis par au moins un détecteur de remplissage, associé aux microcanaux 2 du composant 1, comme décrit ci-dessus pour la détermination de la durée T3.

Sur la figure 5, entre les instants t8 et t9 correspondant à une période de temps T6, une nouvelle impulsion de déblocage Pd est de nouveau appliquée dans le composant 1, afin notamment de passer de façon synchronisée l'ensemble des vannes passives 4b de la deuxième série, comme représenté sur la figure 8.

Entre les instants t9 et t10, une étape éventuelle de retour à zéro de la différence de pression peut être appliquée. Puis, entre les instants t10 et t11, une nouvelle période continue intermédiaire Pav1 d'avancée du liquide peut être réalisée, afin de remplir la troisième série des zones 3c de réaction ou de détection, comme représenté sur la figure 8.

Le procédé de contrôle continue ainsi de suite tout le long des microcanaux 2 du composant 1, avec alternance entre des impulsions de déblocage Pd, pour le passage de vannes passives 4 suivantes éventuelles (non représentées), des périodes Pav1 et Pav2 d'avancée du liquide, pour le remplissage de zones 3 de réaction ou de détection suivantes éventuelles (non représentées), et des étapes de remise à zéro de la différence de pression, entre deux impulsions de déblocage Pd successives, pour la réalisation des étapes du protocole biologique.

Un tel procédé de contrôle d'un composant microfluidique 1 permet donc de contrôler l'avancée du liquide, notamment de façon synchronisée, sur l'ensemble des microcanaux 2 du composant 1, tout en assurant une réalisation optimale des étapes du protocole biologique, grâce à la mise à zéro de la différence de pression pendant le procédé. Le procédé est applicable quelles que soient les caractéristiques des vannes passives 4, qu'elles soient identiques ou non, grâce à la valeur Psup, de préférence, très élevée des impulsions de déblocage Pd, par rapport à la valeur de seuil Ps maximum de l'ensemble des vannes passives 4.

Il en résulte une fiabilité des analyses effectuées dans les zones 3 de réaction ou de détection et une fiabilité de la mise en oeuvre générale du composant 1. L'influence des défauts éventuels des microcanaux 2 est supprimée.

D'une façon générale, le procédé de contrôle de l'avancée du liquide dans le composant 1, comme décrit ci-dessus, peut s'appliquer à un composant microfluidique comportant un seul microcanal 2. Le procédé est alors destiné notamment à assurer le passage systématique d'une vanne passive 4, quelles que soient ses caractéristiques et quelles que soient les imperfections qu'elle pourrait présenter, et à assurer que les conditions de réalisation des étapes du protocole biologique sont optimales.

Sur la figure 9, un mode particulier de réalisation d'un banc 6 de contrôle automatique de la pression est représenté, pour la mise en oeuvre de procédé de contrôle décrit ci-dessus. Le banc 6 permet notamment de contrôler l'augmentation de la différence de pression entre l'amont et l'aval du composant microfluidique 1. Le banc 6 de contrôle automatique de la pression comporte un réservoir de liquide 7, comprenant une sortie 8 reliée, par exemple, à la chambré d'entrée 5 du composant 1 (non représenté sur la figure 9 pour des raisons de clarté) et une entrée 9 reliée à une source de haute pression 10, par exemple jusqu'à 4bar.

La source de haute pression 10 comporte trois circuits 11 a, 11 b, 11 c en parallèle, équipés chacun, respectivement, d'un manodétendeur 12a, 12b, 12c et d'une vanne électropneumatique 13a, 13b, 13c. L'entrée 9 du réservoir 7 est également reliée à la pression atmosphérique Patm, par un circuit 11 d comprenant une quatrième vanne électropneumatique 13d, le circuit 11 d étant relié aux trois circuits 11 a, 11 b, 11 c en parallèle. Un capteur de pression 14 est relié à l'entrée 9 du réservoir 7 et aux quatre circuits 11 a, 11b, 11c, 11d.

Un tel banc 6 de contrôle automatique de la pression permet notamment de mettre en oeuvre le procédé de contrôle d'un composant microfluidique, comme décrit ci-dessus, et de contrôler des impulsions de pression aussi courtes que 100ms. Par ailleurs, les vannes électropneumatiques 13a à 13d peuvent être pilotées par des relais, eux-mêmes pilotés par un micro-ordinateur. Il en résulte la réalisation de séquences de pression précises et calibrées en entrée du composant microfluidique associé.

Par ailleurs, la durée T1 d'une impulsion de déblocage et la durée T3 d'une période continue intermédiaire d'avancée du liquide Pav1 sont choisies en fonction des caractéristiques du composant 1 et, plus particulièrement, en fonction du volume de gaz présent dans le réservoir 7 du banc 6 de contrôle automatique de la pression, comme décrit ci-dessus.

L'invention n'est pas limitée aux différents modes de réalisation décrits ci-dessus. Les vannes passives 4 du composant 1 peuvent avoir des valeurs de seuil Ps différentes les unes par rapport aux autres et peuvent aussi avoir des caractéristiques géométriques différentes, selon leurs dispositions dans les microcanaux 2.

Les périodes Pav1 et Pav2 d'avancée du liquide, respectivement pendant les durées T3 et T5, peuvent osciller entre la valeur de base Pb et une valeur de différence de pression nulle.

Le nombre de microcanaux 2, des zones 3 de réaction ou de détection et des vannes passives 4 est non limitatif. Il dépend de la taille générale du composant 1 à contrôler et/ou des protocoles biologiques à effectuer.

Par ailleurs, une zone 3 de réaction ou de détection du composant 1 peut être définie par une portion du microcanal 2 correspondant. La zone 3 de réaction ou de détection a alors les mêmes dimensions que le microcanal 2, mais constitue une portion particulière de celui-ci.

Dans une autre variante de réalisation (non représentée) du procédé de contrôle de l'avancée du liquide dans le composant 1, le contrôle de l'augmentation de la différence de pression entre l'amont et l'aval du composant microfluidique 1 peut être réalisé en aval du composant microfluidique 1. À titre d'exemple, le déplacement du liquide peut s'effectuer par dépression en plaçant à la sortie du composant 1, par exemple, une source de vide. Les microcanaux 2 du composant 1 comportent alors chacun une sortie reliée à la source de vide, laquelle définie alors une chambre de sortie commune à tous les microcanaux 2.

Une période supplémentaire facultative de retour à zéro de la différence de pression peut être effectuée entre chaque période additionnelle Pav2 d'avancée du liquide et chaque impulsion de déblocage Pd (figure 5), afin de bloquer l'avancée du liquide juste avant l'impulsion de déblocage Pd. À titre d'exemple, cette période supplémentaire peut avoir une durée de l'ordre de 500ms.

## Revendications

1. Procédé de contrôle de l'avancée d'un liquide de l'entrée vers la sortie d'un composant microfluidique (1) comprenant au moins un microcanal (2), comportant une pluralité de zones (3) de réaction ou de détection successives, disposées à des intervalles prédéterminés, et une pluralité de vannes passives (4), disposées entre deux zones (3) de réaction ou de détection successives, le procédé contrôlant l'avancée du liquide dans le microcanal (2) par contrôle de l'augmentation d'une différence de pression entre l'entrée et la sortie du composant (1),
procédé **caractérisé en ce que** l'augmentation de la différence de pression est contrôlée de manière discontinue sous forme d'impulsions de déblocage (Pd) et **en ce que** la différence de pression est ramenée à une valeur nulle, entre deux impulsions de déblocage (Pd) successives.

2. Procédé selon la revendication 1, **caractérisé en ce que** le contrôle de l'augmentation de la différence de pression est réalisé en amont du composant microfluidique (1).

3. Procédé selon la revendication 2, **caractérisé en ce que** le composant microfluidique (1) comporte une pluralité de microcanaux (2) disposés en parallèle et comprenant chacun une entrée reliée à une chambre d'entrée (5) commune.

4. Procédé selon la revendication 1, **caractérisé en ce que** le contrôle de l'augmentation de la différence de pression est réalisé en aval du composant microfluidique (1).

5. Procédé selon la revendication 4, **caractérisé en ce que** le composant microfluidique (1) comporte une pluralité de microcanaux (2) disposés en parallèle et comprenant chacun une sortie reliée à une chambre de sortie commune.

6. Procédé selon l'une quelconque des revendications 1 à 5, **caractérisé en ce que** chaque impulsion de déblocage (Pd) présente une valeur (Psup) supérieure à une valeur de seuil (Ps) maximum des vannes passives (4).

7. Procédé selon la revendication 6, **caractérisé en ce que** le rapport de ladite valeur (Psup) d'une impulsion de déblocage (Pd) sur ladite valeur de seuil (Ps) maximum des vannes passives (4) est supérieur à 1,25.

8. Procédé selon l'une quelconque des revendications 1 à 7, **caractérisé en ce que** la durée (T1, T6) d'une impulsion de déblocage (Pd) est de l'ordre de 100ms à 500ms.

9. Procédé selon l'une quelconque des revendication 1 à 8, **caractérisé en ce qu'**il comporte, entre deux impulsions de déblocage (Pd) successives, au moins une période continue intermédiaire (Pav1) d'avancée du liquide, pendant laquelle la différence de pression appliquée a une valeur de base (Pb) maximale, inférieure à une valeur de seuil (Ps) minimum des vannes passives (4).

10. Procédé selon la revendication 9, **caractérisé en ce que** la différence de pression est ramenée à une valeur nulle immédiatement après une période continue intermédiaire (Pav1) d'avancée du liquide.

11. Procédé selon l'une des revendications 9 et 10, **caractérisé en ce que** la valeur de base (Pb) de la différence de pression, pendant la période continue intermédiaire (Pav1) d'avancée du liquide, est de l'ordre de 15mbar.

12. Procédé selon l'une quelconque des revendications 9 à 11, **caractérisé en ce qu'**il comporte l'application d'une différence de pression pendant une période additionnelle (Pav2) d'avancée du liquide, juste avant une impulsion de déblocage (Pd).

13. Procédé selon l'une quelconque des revendications 9 à 12, **caractérisé en ce que** la durée (T3, T5) d'une période (Pav1, Pav2) d'avancée du liquide est déterminée en fonction de signaux fournis par au moins un détecteur de remplissage associé à chaque microcanal (2) du composant (1).

## Claims

1. A method for controlling the progression of a fluid from inlet to outlet of a microfluidic component (1) comprising at least one microchannel (2), comprising a plurality of successive reaction or detection zones (3) arranged at predefined intervals, and a plurality of passive valves (4) arranged between two successive reaction or detection zones (3), the method controlling progression of the fluid in the microchannel (2) by controlling the increase of a pressure difference between the inlet and outlet of the component (1),
a method **characterized in that** the pressure difference increase is controlled in discontinuous manner in the form of enabling pulses (Pd) and **in that** the pressure difference is adjusted to a zero value between two successive enabling pulses (Pd).

2. The method according to claim 1, **characterized in that** control of the pressure difference increase is performed upstream from the microfluidic component (1).

3. The method according to claim 2, **characterized in that** the microfluidic component (1) comprises a plurality of microchannels (2) arranged in parallel and each comprising an inlet connected to a common inlet chamber (5).

4. The method according to claim 1, **characterized in that** control of the pressure difference increase is performed downstream from the microfluidic component (1).

5. The method according to claim 4, **characterized in that** the microfluidic component (1) comprises a plurality of microchannels (2) arranged in parallel and each comprising an outlet connected to a common outlet chamber.

6. The method according to any one of claims 1 to 5, **characterized in that** each enabling pulse (Pd) presents a value (Psup) that is higher than a maximum threshold value (Ps) of the passive valves (4).

7. The method according to claim 6, **characterized in that** the ratio of said value (Psup) of an enabling pulse (Pd) over said maximum threshold value (Ps) of the passive valves (4) is greater than 1.25.

8. The method according to any one of claims 1 to 7, **characterized in that** the duration (T1, T6) of an enabling pulse (Pd) is about 100ms to 500ms.

9. The method according to any one of claims 1 to 8, **characterized in that** it comprises, between two successive enabling pulses (Pd), at least one continuous intermediate fluid advance period (Pav1) during which the pressure difference applied has a maximal base value (Pb), lower than a minimum threshold value (Ps) of the passive valves (4).

10. The method according to claim 9, **characterized in that** the pressure difference is adjusted to a zero value immediately after a continuous intermediate fluid advance period (Pav1).

11. The method according to one of claims 9 and 10, **characterized in that** the base value (Pb) of the pressure difference during the continuous intermediate fluid advance period (Pav1) is about 15mbar.

12. The method according to any one of claims 9 to 11, **characterized in that** it comprises application of a pressure difference during an additional fluid advance period (Pav2), just before an enabling pulse (Pd).

13. The method according to any one of claims 9 to 12, **characterized in that** the duration (T3, T5) of a fluid advance period (Pav1, Pav2) is determined according to signals supplied by at least one filling detector associated with each microchannel (2) of the component (1).

## Patentansprüche

1. Verfahren zur Steuerung der Vorankommens einer Flüssigkeit vom Eingang eines mikrofluidischen Bauteils (1) zu dessen Ausgang, umfassend mindestens einen Mikrokanal (2), der mehrere aufeinanderfolgende Reaktions- oder Erfassungsbereiche (3) aufweist, die in vorbestimmten Abständen angeordnet sind, und eine Mehrzahl passiver Ventile (4), die zwischen zwei aufeinanderfolgenden Reaktions- oder Erfassungsbereichen (3) angeordnet sind, wobei das Verfahren das Vorankommen der Flüssigkeit in dem Mikrokanal (2) durch Steuerung des Anstiegs einer Druckdifferenz zwischen dem Ein- und Ausgang des Bauteils (1) steuert,
Verfahren, das **dadurch gekennzeichnet ist, dass** der Anstieg der Druckdifferenz diskontinuierlich in Form von Freigabeimpulsen (Pd) gesteuert wird und dass die Druckdifferenz zwischen zwei aufeinanderfolgenden Freigabeimpulsen (Pd) auf einen Wert Null zurückgeführt wird.

2. Verfahren nach Anspruch 1, **dadurch gekennzeichnet, dass** die Steuerung des Anstiegs der Druckdifferenz dem mikrofluidischen Bauteil (1) vorgeschaltet erfolgt.

3. Verfahren nach Anspruch 2, **dadurch gekennzeichnet, dass** das mikrofluidische Bauteil (1) mehrere, parallel angeordnete Mikrokanäle (2) umfasst, die jeweils einen Eingang haben, der an eine gemeinsame Eingangskammer (5) angeschlossen ist.

4. Verfahren nach Anspruch 1, **dadurch gekennzeichnet, dass** die Steuerung des Anstiegs der Druckdifferenz dem mikrofluidischen Bauteil (1) nachgeschaltet erfolgt.

5. Verfahren nach Anspruch 4, **dadurch gekennzeichnet, dass** das mikrofluidische Bauteil (1) mehrere, parallel angeordnete Mikrokanäle (2) aufweist, die jeweils einen Ausgang haben, der an eine gemeinsame Ausgangskammer angeschlossen ist.

6. Verfahren nach einem der Ansprüche 1 bis 5, **dadurch gekennzeichnet, dass** jeder Freigabeimpuls (Pd) einen Wert (Psup) hat, der über einem maximalen Schwellenwert (Ps) der passiven Ventile (4) liegt.

7. Verfahren nach Anspruch 6, **dadurch gekennzeichnet, dass** das Verhältnis des genannten Werts (Psup) eines Freigabeimpulses (Pd) zum maximalen Schwellenwert (Ps) der passiven Ventile (4) über 1,25 liegt.

8. Verfahren nach einem der Ansprüche 1 bis 7, **dadurch gekennzeichnet, dass** die Dauer (T1, T6) eines Freigabeimpulses (Pd) etwa 100 bis 500 ms beträgt.

9. Verfahren nach einem der Ansprüche 1 bis 8, **dadurch gekennzeichnet, dass** es zwischen zwei aufeinanderfolgenden Freigabeimpulsen (Pd) mindestens eine durchgehende Zwischenperiode (Pav1) des Vorankommens der Flüssigkeit umfasst, während derer die angewandte Druckdifferenz einen maximalen Basiswert (Pb) hat, der unter einem Mindest-Schwellenwert (Ps) der passiven Ventile (4) liegt.

10. Verfahren nach Anspruch 9, **dadurch gekennzeichnet, dass** der Druckunterschied unmittelbar nach einer durchgehenden Zwischenperiode (Pav1) des Vorankommens der Flüssigkeit auf einen Wert Null zurückgeführt wird.

11. Verfahren nach einem der Ansprüche 9 und 10, **dadurch gekennzeichnet, dass** der Basiswert (Pb) der Druckdifferenz während der durchgehenden Zwischenperiode (Pav1) des Vorankommens der Flüssigkeit etwa 15 mbar beträgt.

12. Verfahren nach einem der Ansprüche 9 bis 11, **dadurch gekennzeichnet, dass** es das Aufdrücken einer Druckdifferenz während einer zusätzlichen Periode (Pav2) des Vorankommens der Flüssigkeit direkt vor einem Freigabeimpuls (Pd) umfasst.

13. Verfahren nach einem der Ansprüche 9 bis 12, **dadurch gekennzeichnet, dass** die Dauer (T3, T5) einer Periode (Pav1, Pav2) des Vorankommens der Flüssigkeit in Abhängigkeit von Signalen bestimmt wird, die von mindestens einem Fülldetektor geliefert werden, der jedem Mikrokanal (2) des Bauteils (1) zugeordnet ist.
